# EUROPEAN PATENT SPECIFICATION

(11) **EP 2 433 341 B1**
(45) Date of publication and mention of the grant of the patent: **28.03.2018**
(21) Application number: 10777899.5
(22) Date of filing: 10.05.2010
(51) Int. Cl.: H01R 13/68, B60R 16/00, B60R 16/02, H01R 13/11, H01R 4/18, H01H 85/20

(54) **CONNECTOR FOR LOW PROFILE FUSE**
STECKER FÜR EINE NIEDRIGPROFILSICHERUNG
CONNECTEUR POUR FUSIBLE À PROFIL SURBAISSÉ

(30) Priority: 19.05.2009 KR 20090043612
(43) Date of publication of application: 28.03.2012
(73) Proprietor: TYCO ELECTRONICS AMP KOREA Co., Ltd., Gyeongsangbuk-do, 38459 (KR)
(72) Inventor: LEE, Chul sub, Daegu 706-170 (KR); LEE, Sang Hee, Gyeongsan-si Gyeongsangbuk-do 712-837 (KR)
(74) Representative: Johnstone, Douglas Ian
(86) International application number: PCT/KR2010/002941
(87) International publication number: WO 2010/134712

(56) References cited:
- JP-A- 10 149 855
- KR-B1- 100 787 202
- KR-B1- 100 874 963
- KR-B1- 100 874 963
- US-A- 6 095 874
- US-A- 6 095 874
- US-A1- 2005 118 891
- US-A1- 2006 121 797
- US-B1- 6 811 450

## Description

### Technical Field

The present invention relates to a connector, which is provided in a vehicular fuse box, in which a Low Profile (LP) fuse is inserted, and is electrically connected to the LP fuse so as to provide the LP fuse with a fixing force, and more particularly, to a connector for an LP fuse, which can assure easy insertion of an LP fuse and prevent an installed LP fuse from being separated by external shock, such as vibration of a vehicle, etc.

### Background Art

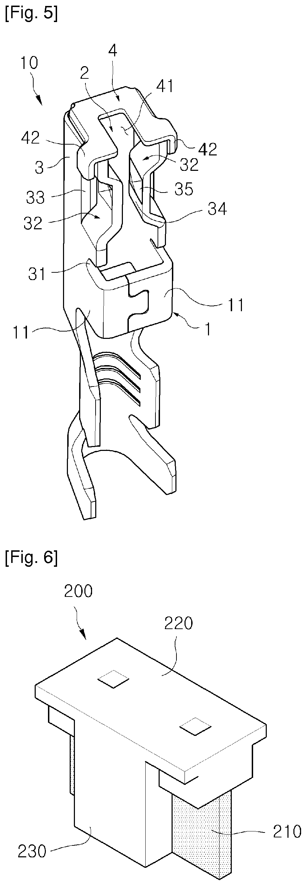

A Low Profile (LP) fuse is a kind of small fuse designed to reduce manufacturing costs and has a smaller size, more particularly, a smaller height than other kinds of fuses. Referring to FIG. 6, a general LP fuse 200 includes a body 220, a protrusion 230 protruding from the center of a lower surface of the body 220 so as to be inserted into a fuse box, and electrode terminals 210 provided at opposite ends of the protrusion 230, the electrode terminals 210 being made of a conductive metal.

The fuse box is provided with connectors. The connectors are electrically connected to the electrode terminals, respectively, and provide the LP fuse with a fixing force to prevent separation of the LP fuse inserted into the fuse box.

The connectors used in the fuse box should be designed to be assure easy insertion of the LP fuse because a plurality of LP fuses may be inserted into the fuse box and may be exchanged several times during a vehicle's lifespan. In addition, the connectors should provide the LP fuse with a fixing force sufficient to prevent separation of the LP fuse inserted into the fuse box even if external shock, such as vibration of a vehicle, etc., is applied. The connectors also should have a sufficient cross sectional area in consideration of the quantity of current passing through the LP fuse.

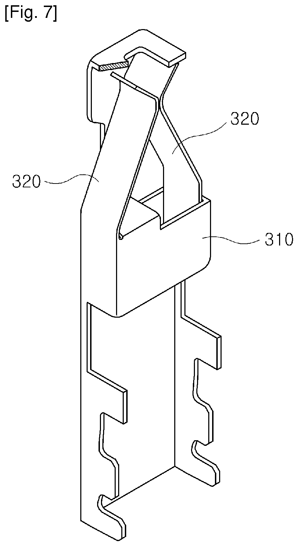

FIG. 7 illustrates one of connectors provided in a fuse box according to the related art.

The illustrated connector includes a body 310 configured to be fixed to the bottom of a recess defined in a fuse box and having a fixture formed at a lower end thereof for the connection of an electric wire, and a pair of elastic pieces 320 extending from an upper end of the body 310 to protrude from the recess of the fuse box so as to enable insertion and fixation of electrode terminals of an LP fuse.

The elastic pieces 320 are obliquely bent such that a distance between both the elastic pieces 320 is reduced upward. Upper ends of the elastic pieces 320 are bent outward to extend away from each other such that a corresponding electrode terminal can be easily inserted downward to the top of the elastic pieces 320.

Accordingly, the pair of elastic pieces 320 acts to be elastically bent outward to receive an electrode terminal and to press and fix the electrode terminal via a restoration force thereof.

The elastic pieces 320 of the connector according to the related art, however, extend lengthily upward from the body 310 and do not exhibit a strong fixing force, thus causing an LP fuse to be easily separated from the fuse box due to vibration generated during driving of a vehicle. Specifically, despite the fact that fixation of the LP fuse depends on only a press force of the elastic pieces 320 used to fix an electrode terminal of the LP fuse, the elastic pieces 320 take the form of cantilevers extending lengthily upward from the body 310 and thus, are greatly affected by vibration, showing deterioration in a fixing force.

To solve the above described disadvantage of the connector according to the relate art, attempts have been made to maximize a restoration force of the elastic pieces 320 when the elastic pieces 320 are pushed away from each other upon insertion of the electrode terminal. To this end, the elastic pieces 320 have been configured to be closer to each other upward such that the upper ends of the elastic pieces 320 come into contact with each other.

However, the above described configuration does not provide a basic solution to the continuous vibration generated in the course of a vehicle's lifespan, and also, entails difficulty in assembly of an LP fuse because the elastic pieces 320, the upper ends of which come into contact with each other, cause an increased insertion force required to press and insert the LP fuse in order to push the elastic pieces 320 away from each other.

In particular, in the case where a plurality of LP fuses is assembled simultaneously into a fuse box during an assembly operation of a vehicle, a significant insertion force is required on a per LP fuse basis, causing difficulty in assembly of all the LP fuses.

US 6811450, on which the preamble of claim 1 is based, discloses an electrical receptacle terminal comprising a body having a main portion and an end portion. The end portion comprises wire connection means to electrically connect to an electrical wire. The main portion has a pair of side walls wherein each side wall has an inwardly protruding contact portion for engaging a terminal pin. Each side wall has a recess and a tab extends upwards from the side wall on one side of the recess. The tabs of the side walls are L-shaped wherein their distal ends face each other.

US 6095874 discloses an electrical receptacle terminal connector having a contact section, and a crimping barrel for connection to a wire. The contact section has a bottom wall, and a pair of side walls extending orthogonally from side edges of the bottom wall wherein the side walls engage an inserted mating tab of a complementary terminal.

US 2005/0118891 discloses a female terminal having a body part, and a connecting part for connection to a conductor. The body part has a receiving space for receiving a blade of a male terminal, and first and second elastic pieces of the body part extend into the receiving space to engage the blade.

### Disclosure of Invention

### Technical Problem

Therefore, the present invention has been made in view of the above problems, and it is an object of the present invention to provide a Low Profile (LP) fuse with an increased fixing force, so as to prevent a fixed LP fuse from being separated by external shock, such as vibration of a vehicle, etc.

It is another object of the present invention to provide a connector, used to elastically fix an electrode terminal of an LP fuse, with an improved configuration to increase an elastic force of the connector.

It is another object of the present invention to achieve reliable electric connection between a connector and an electrode terminal of an LP fuse.

It is another object of the present invention to allow an LP fuse to be easily inserted even with a low force, assuring easy insertion of all LP fuses.

It is another object of the present invention to prevent damage to an electrode terminal of an LP fuse due to improper assembly of the LP fuse.

It is a further object of the present invention to prevent an elastic fixing piece of a connector used to elastically fix an LP fuse from being excessively deformed in a direction and thus, being broken down.

### Technical Solution

In accordance with the present invention, the above and other objects can be accomplished by the provision of a connector for a Low Profile (LP) fuse comprising: a body suitable to be inserted into a mounting recess defined in a fuse box, the body suitable to be fixed to a bottom surface of the mounting recess, and a lower end of the body comprising wire connection means suitable to be electrically connected to an electric wire; a rear piece extending from the body and suitable to be received into the mounting recess; a pair of supporting pieces bent from opposite sides of the rear piece to extend parallel to each other in a direction orthogonal to an insertion direction of an electrode terminal of the LP fuse, thus suitable to fix the electrode terminal, wherein the pair of supporting pieces respectively includes holding pieces, and both the holding pieces of the supporting pieces are inwardly indented to be closer to each other; L-shaped lateral pieces extending horizontally from opposite sides immediately beneath the rear piece to constitute a block together, the lower ends of the supporting pieces being connected to the lateral pieces; and a recess indented in a connection region between a lower end of each supporting piece and one said lateral piece; characterized in that each holding piece is vertically incised to have upper and lower ends connected to the corresponding supporting piece; and the connector further comprises a cover piece extending throughout an upper end of the rear piece and upper ends of the supporting pieces and defining an entrance suitable for the passage of the electrode terminal, wherein the cover piece includes a pair of reinforcing pieces bent from opposite sides of the cover piece to surround the upper ends of the supporting pieces, thus serving to prevent the supporting pieces from being excessively pushed outward away from each other.

The holding pieces may respectively have flat surfaces to face each other, and a press protrusion may protrude inward from the flat surface to press the electrode terminal.

### Advantageous Effects

A connector for a Low Profile (LP) fuse according to an embodiment of the present invention has the following several effects.

First, supporting pieces of the connector, which produce from a rear piece to have a small length, exhibits a considerably increased fixing force for the LP fuse, thereby preventing the LP fuse from being separated by external shock, such as vibration of a vehicle and resulting in enhanced reliability in the fixation of the LP fuse.

Second, as a result of providing the supporting pieces with press protrusions, it is possible to further increase the fixing force for the LP fuse and to achieve accurate electric connection between the connector and the LP fuse, resulting in enhanced reliability in the electric connection.

Third, the supporting pieces of the connector are further provided with holding pieces spaced apart from each other. The holding pieces can function to reduce a force required for the initial insertion of the LP fuse, thus enabling an easy assembly operation.

Fourth, the connector includes a cover piece to prevent breakdown of the supporting pieces caused when the LP fuse is eccentrically inserted into the connector. This can reduce assembly error, resulting in enhancement in productivity.

Fifth, when the cover piece is provided with reinforcing pieces, it is possible to prevent the supporting pieces from being excessively pushed outward away from each other upon improper assembly of the LP fuse and thus, prevent deterioration in the elastic force of the supporting pieces.

### Brief Description of Drawings

The above and other objects, features and other advantages of the present invention will be more clearly understood from the following detailed description taken in conjunction with the accompanying drawings, in which:
FIG. 1 is a perspective view illustrating a connector for a Low Profile (LP) fuse according to an embodiment of the present invention;
FIG. 2 is a sectional view illustrating the use of the connector for the LP fuse illustrated in FIG. 1;
FIG. 3 is a partial cut-away perspective view illustrating the use of the connector for the LP fuse illustrated in FIG. 2;
FIG. 4 is a schematic sectional view taken along the line a-a of FIG. 3;
FIG. 5 is a perspective view illustrating a modified configuration of the connector for the LP fuse illustrated in FIG. 1;
FIG. 6 is a view illustrating a general LP fuse; and
FIG. 7 is a view illustrating the related art.

### Best Mode for Carrying out the Invention

Hereinafter, functions, configuration, and operation of a connector for a Low Profile (LP) fuse according to a preferred embodiment of the present invention will be described in detail with reference to the accompanying drawings.

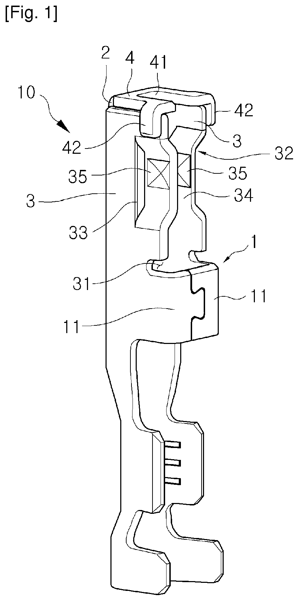

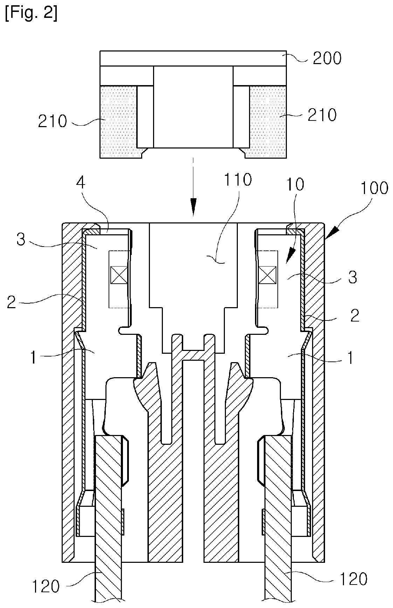

FIG. 1 is a perspective view illustrating a connector for a Low Profile (LP) fuse according to an embodiment of the present invention, and FIG. 2 is a sectional view illustrating the use of the connector for the LP fuse illustrated in FIG. 1.

The connector 10 for the LP fuse according to the present invention includes a body 1, a rear piece 2, and a pair of supporting pieces 3. The body 1 is inserted into a mounting recess defined in a fuse box and is fixed to a bottom surface of the mounting recess, and a lower end of the body 1 is electrically connected to an electric wire 120. The rear piece 2 extends from the body 1 into the mounting recess. The pair of supporting pieces 3 is bent from opposite sides of the rear piece 2 and extends parallel to each other in a direction orthogonal to an insertion direction of an electrode terminal of the LP fuse, thus serving to fix the electrode terminal.

The body 1, as illustrated in FIG. 2, is fixed to the bottom surface of the mounting recess 110 defined in the fuse box 100. The body 1 may be inserted and fixed by use of a lance, or may be formed by insert injection molding. The lower end of the body 1 may have a known configuration to be electrically connected to the electric wire 120.

The rear piece 2 extends upward from the body 1, and takes the form of a flat plate extending from either inner side surface of the mounting recess 110.

The supporting pieces 3, which are bent from opposite sides of the rear piece 2 and extend parallel to each other, come into contact with the electrode terminal 210 of the LP fuse 200 so as to provide the electrode terminal 210 with a fixing force.

In this case, to assure the flow of a sufficient quantity of current required for normal operation of the LP fuse 200, it is important that the rear piece 2 has a horizontal width larger than a thickness of the electrode terminal 210, so as to achieve a sufficient cross sectional area for the flow of current. Thus, to allow the electrode terminal 210 to be caught by the supporting pieces 3, the supporting pieces 3, which are bent from opposite sides of the rear piece 2 having the large horizontal width, may be additionally provided with holding pieces that will be described hereinafter.

The electrode terminal 210, inserted between both the supporting pieces 3, acts to push the supporting pieces 3 away from each other, and the supporting pieces 3 pushed away from each other serve to press and fix the electrode terminal 210 via a restoration force thereof.

Lower ends of the supporting pieces 3 are integrally formed with the body 1, to assure a further increased restoration force of the supporting pieces 3. Specifically, the body 3 may include L-shaped lateral pieces 11 extending horizontally from opposite sides immediately beneath the rear piece 2 to constitute a block together, and the lower ends of the supporting pieces 3 may be connected to the lateral pieces 11.

More specifically, the body 1 may define a block as the lateral pieces 11 extend in an L-shaped form from opposite sides immediately beneath the rear piece 2 and facing distal ends of the lateral pieces 11 are coupled to each other. In this case, the lateral pieces 11, coming into contact with each other, may be welded to each other. Alternatively, one of the lateral pieces 11 may be formed with a recess and the other lateral piece 11 may be formed with a protrusion corresponding to the recess, such that both the lateral pieces 11 are fixed to each other via engagement of the recess and the protrusion.

When the lower ends of the supporting pieces 3 are integrally formed with the block of the body 1, the supporting pieces 3 are able to acquire an increased elastic force that is applied to push both the supporting pieces 3 away from each other.

In addition, a recess 31 may be indented in a connection region between the lower end of the supporting piece 3 and the lateral piece 11. With this configuration, a length from the rear piece 2 to the recess 31, i.e. a horizontal length of the supporting piece 3 is partially reduced, which causes a reduction in a force required to push the supporting pieces 3 outward away from each other.

Accordingly, when the LP fuse 200 is inserted into the mounting recess 110, an initial insertion force required to push the supporting pieces 3 away from each other can be reduced.

In the meantime, as described above, to fix the electrode terminal 210 of the LP fuse 200 using the supporting pieces 3, the supporting pieces 3 may be provided respectively with holding pieces 32.

The holding pieces 32 are centrally indented such that center portions of the supporting pieces 3 are closer to each other than the remaining portions of the supporting pieces 3. In this case, one side end of each holding piece 32 is not connected to the corresponding supporting piece 3 through provision of a vertical incision 33, whereas upper and lower ends of the holding piece 32 are connected to the supporting piece 3.

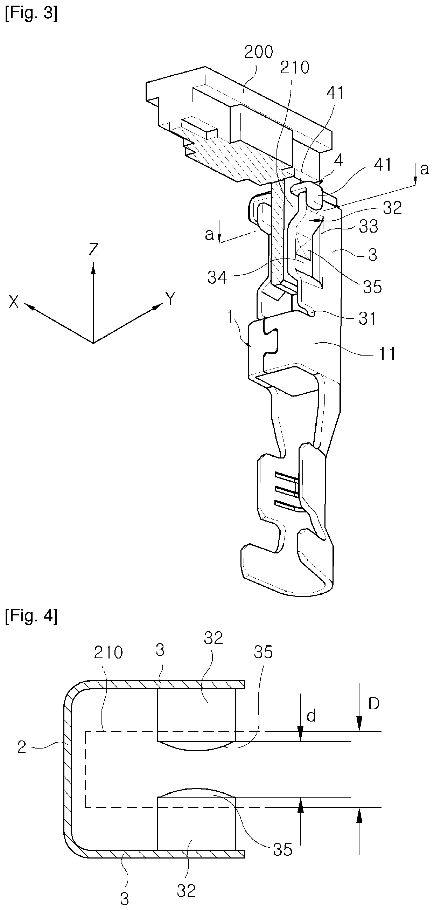

The holding pieces 32 are inwardly indented from the respective supporting pieces 3 such that a distance d between the holding pieces 32 is smaller than a thickness D of the electrode terminal 210 (in FIG. 4, d < D).

The above described holding pieces 32 function to increase a cross sectional area for the passage of current and also, to define a space into which the electrode terminal 210 can be fitted.

The holding pieces 32 may have flat surfaces 34 facing each other, and press protrusions 35 may be formed at the flat surfaces 34 to press the electrode terminal 210 fitted between the holding pieces 32. Specifically, the flat surfaces 34 are formed respectively at the holding pieces 32 to be parallel to each other, and the press protrusions 35 are raised from the facing flat surfaces 34 by, for example, punching.

The press protrusions 35 come into point contact with the electrode terminal 210. This can further increase a press force applied to the electrode terminal 210 and achieve perfect electric connection between the electrode terminal 210 and the connector 10.

FIG. 5 is a perspective view illustrating a modified configuration of the connector for the LP fuse illustrated in FIG. 1.

An upper end of the connector 10 is exposed to the outside from the top of the mounting recess 110 and therefore, the supporting pieces 3 may be easily deformed due to deformation interference caused by invasion of impurities from the outside or improper assembly of the LP fuse 200. Accordingly, to protect the supporting pieces 3, a cover piece 4 may further extend from the rear piece 2 to cover the upper ends of the supporting pieces 3.

The cover piece 4 extends throughout the upper end of the rear piece 2 and the upper ends of the supporting pieces 3 to have a U-shaped form, and thus, is formed with an entrance 41 for the passage of the electrode terminal 210.

In this case, if the electrode terminal 210 is eccentrically inserted between the supporting pieces 3 rather than being inserted on a median axis between the supporting pieces 3, a lower end of the electrode terminal 210 is caught by the cover piece 4. This can prevent excessive deformation of the supporting pieces 3 caused when the LP fuse 200 is inserted in an incorrect direction and invasion of impurities.

In addition, the cover piece 4 may be formed at opposite sides thereof with reinforcing pieces 42. The reinforcing pieces 42 extend downward orthogonally from opposite sides of the cover piece 4 to surround the upper ends of the supporting pieces 3, thereby serving to prevent the supporting pieces 3 from being excessively pushed outward away from each other.

Specifically, the reinforcing pieces 42 are formed at opposite distal ends of the cover piece 4 to surround front corners of the supporting pieces 3 since the front corners exhibit the greatest outward displacement upon insertion of the LP fuse 200. In this case, the reinforcing pieces 42 are spaced apart from the supporting pieces 3, rather than coming into contact with the supporting pieces 3.

In this case, a distance between the supporting piece 3 and the reinforcing piece 42 is determined in consideration of an outwardly moved distance of the supporting piece 3 caused when the supporting piece 3 is pushed outward by the electrode terminal 210 upon insertion of the LP fuse 200. When the LP fuse 200 is obliquely inserted, the supporting piece 3 is supported by the reinforcing piece 42, which can prevent the supporting piece 3 from being excessively pushed outward.

Moreover, since the supporting piece 3 and the reinforcing piece 42 do not normally come into contact with each other, the supporting piece 3 does not act to push the reinforcing piece 42 outward under a normal LP fuse assembly situation, and thus, there is no need for an additional insertion force to elastically deform the reinforcing piece 42 upon insertion of the LP fuse 200.

Accordingly, the reinforcing piece 42 can prevent the supporting piece 3 from being excessively pushed outward without an increase in the insertion force of the LP fuse 200.

Hereinafter, operation of the connector 10 for the LP fuse 200 according to the present invention will be described with reference to FIGS. 1 to 4.

The connector 10 for the LP fuse 200 according to the embodiment of the present invention, as described above, is configured such that the symmetrical supporting pieces 3 come into contact with the electrode terminal 210 and thus, function to fix the electrode terminal 210.

The supporting pieces 3, as illustrated in FIG. 2, extend from the rear piece 2 in a direction orthogonal to a vertical insertion or separation direction (a Z-axis direction) of the LP fuse 200, thereby serving to elastically support the electrode terminal 210.

More specifically, referring to FIGS. 3 and 4 clearly illustrating the insertion and fixation relationship between the electrode terminal 210 and the connector 10, the electrode terminal 210 has a large length in the insertion direction (a vertical direction or Z-axis direction) of the LP fuse 200, but has a relatively small length in a front and rear direction (an X-axis direction) orthogonal to the insertion direction. The small length portion of the electrode terminal 210 is caught by the connector 10.

In this case, assuming that the rear piece 2, which does not undergo elastic deformation upon insertion of the LP fuse 200, is a stationary wall, and that the supporting pieces 3, which extend from the rear piece 2 and are elastically displaced by the electrode terminal 210, are cantilevers fixed to the stationary wall, each supporting piece 3 can take the form of a cantilever that has a lengthy vertical connection length with respect to the stationary wall, but has a relatively small protruding length.

It will be appreciated that the above described cantilever (the supporting piece 3), having a lengthy connection length and a small protruding length, exhibits a greater elastic force against an external force than that of a conventional elastic piece in the form of an elongated cantilever.

In conclusion, according to the present invention, the supporting piece 3, provided at the connector 10 for the LP fuse, extends by a small length from the rear piece 2 in an X-axis direction orthogonal to the insertion direction (a Z-axis direction) of the LP fuse 200, thus exhibiting a great elastic force and consequently, providing the LP fuse 200 inserted in the mounting recess 110 with a considerably great fixing force.

Accordingly, the supporting piece 3 can keep the LP fuse 200 fixed despite vibration caused during driving of a vehicle and furthermore, does not exhibit deterioration in an elastic force when faced with continuous, long time vibration.

The great fixing force of the supporting piece 3 may be further increased by providing the holding piece 32 with the press protrusion 35. That is, a fixing force for the inserted LP fuse can increase a vertical drag force by double indentations defined by the holding piece 32 and the press protrusion 35, resulting in a considerably increased frictional force when the LP fuse is pulled out.

In the meantime, a distal end of the press protrusion 35 exhibits a reliable local surface contact with a surface of the electrode terminal 210. Thus, the press protrusion 35 functions to prevent short circuiting between the LP fuse 200 and the connector 10 and to achieve reliable electrical connection between the electrode terminal 210 and the supporting pieces 3.

Both the holding pieces 32 and more particularly, both the press protrusions 35 are spaced apart from each other and thus, it is unnecessary to provide the LP fuse 200 with a great insertion force upon initial insertion thereof. As illustrated in FIG. 4, since the flat surfaces 34 of the holding pieces 32 are originally spaced apart from each other, the supporting pieces 3 can exhibit a small deformation length when they are elastically displaced by the electrode terminal 210.

In addition, the incision 31 punched between the supporting piece 3 and the body 1 can allow the supporting piece 3 to be pushed outward even by a small insertion force upon insertion of the LP fuse 200.

With the above described configuration, it is possible to reduce an insertion force required to insert and fix the LP fuse and to prevent the inserted LP fuse from being unintentionally separated by external shock, such as vibration of a vehicle, etc. As a result, enhanced assembly efficiency and operation reliability of the LP fuse can be accomplished.

### Mode for the Invention

Various embodiments have been described in the best mode for carrying out the invention.

## Claims

1. A connector (10) for a Low Profile (LP) fuse (200) comprising: a body (1) suitable to be inserted into a mounting recess (110) defined in a fuse box (100), the body (1) suitable to be fixed to a bottom surface of the mounting recess (110), and a lower end of the body (1) comprising wire connection means suitable to be electrically connected to an electric wire (120); a rear piece (2) extending from the body (1) and suitable to be received into the mounting recess (110); a pair of supporting pieces (3) bent from opposite sides of the rear piece (2) to extend parallel to each other in a direction orthogonal to an insertion direction (Z) of an electrode terminal (210) of the LP fuse (200), thus suitable to fix the electrode terminal (210), wherein the pair of supporting pieces (3) respectively includes holding pieces (32), and both the holding pieces (32) of the supporting pieces (3) are inwardly indented to be closer to each other; L-shaped lateral pieces (11) extending horizontally from opposite sides immediately beneath the rear piece (2) to constitute a block together, the lower ends of the supporting pieces (3) being connected to the lateral pieces (11); and a recess (31) indented in a connection region between a lower end of each supporting piece (3) and one said lateral piece (11);
**characterized in that**
each holding piece (32) is vertically incised to have upper and lower ends connected to the corresponding supporting piece (3); and
the connector (10) further comprises a cover piece (4) extending throughout an upper end of the rear piece (2) and upper ends of the supporting pieces (3) and defining an entrance (41) suitable for the passage of the electrode terminal (210), wherein the cover piece (4) includes a pair of reinforcing pieces (42) bent from opposite sides of the cover piece (4) to surround the upper ends of the supporting pieces (3), thus serving to prevent the supporting pieces (3) from being excessively pushed outward away from each other.

2. The connector according to claim 1, wherein the holding pieces (32) respectively have flat surfaces (34) to face each other; and a press protrusion (35) protrudes inward from the flat surface (34) suitable to press the electrode terminal (210).

3. The connector according to claim 1 or 2, wherein distal ends of the L-shaped lateral pieces (11) face each other and are coupled together.

4. The connector according to any preceding claim, wherein the lower ends of the supporting pieces (3) are integrally formed with the block.

## Patentansprüche

1. Verbinder (10) für eine Niederprofil-(LP)-Sicherung (200), der Folgendes umfasst: einen Körper (1), der zum Einsetzen in eine in einem Sicherungskasten (100) definierte Montageaussparung (110) geeignet ist, wobei der Körper (1) zum Befestigen an einer Bodenfläche der Montageaussparung (110) geeignet ist, wobei ein unteres Ende des Körpers (1) Drahtanschlussmittel umfasst, die zum elektrischen Verbinden mit einem elektrischen Draht (120) geeignet sind; wobei sich ein hinteres Stück (2) von dem Körper (1) erstreckt und zur Aufnahme in der Montageaussparung (110) geeignet ist; wobei ein Paar Trägerstücke (3) von gegenüberliegenden Seiten des hinteren Stücks (2) gebogen ist, so dass es parallel zueinander in einer Richtung orthogonal zu einer Einsetzrichtung (Z) eines Elektrodenanschlusses (210) der LP-Sicherung (200) verläuft, so dass es zum Befestigen des Elektrodenanschlusses (210) geeignet ist, wobei das Paar Trägerstücke (3) jeweils Haltestücke (32) beinhaltet und beide Haltestücke (32) der Trägerstücke (3) einwärts eingebuchtet sind, so dass sie einander näher liegen; wobei L-förmige seitliche Stücke (11) horizontal von gegenüberliegenden Seiten unmittelbar unterhalb des hinteren Stücks (2) verlaufen, um zusammen einen Block zu bilden, wobei die unteren Enden der Trägerstücke (3) mit den seitlichen Stücken (11) verbunden sind; und eine Aussparung (31) in einer Verbindungsregion zwischen einem unteren Ende jedes Trägerstücks (3) und einem genannten seitlichen Stück (11) eingearbeitet ist;
**dadurch gekennzeichnet, dass**
jedes Haltestück (32) vertikal eingeschnitten ist, so dass obere und untere Enden mit dem entsprechenden Trägerstück (3) verbunden sind; und
der Verbinder (10) ferner ein Abdeckstück (4) umfasst, das durch ein oberes Ende des hinteren Stücks (2) und obere Enden der Trägerstücke (3) verläuft und einen Eingang (41) definiert, der für die Passage des Elektrodenanschlusses (210) geeignet ist, wobei das Abdeckstück (4) ein Paar Verstärkungsstücke (42) beinhaltet, die von gegenüberliegenden Seiten des Abdeckstücks (4) gebogen sind, so dass sie die oberen Enden der Trägerstücke (3) umgeben, so dass sie dazu dienen zu verhindern, dass die Trägerstücke (3) zu stark nach außen voneinander weg geschoben werden.

2. Verbinder nach Anspruch 1, wobei die Haltestücke (32) jeweils flache Oberflächen (34) haben, die einander zugewandt sind; und ein Pressvorsprung (35) von der flachen Oberfläche (34) nach innen vorsteht, geeignet zum Pressen gegen den Elektrodenanschluss (210).

3. Verbinder nach Anspruch 1 oder 2, wobei distale Enden der L-förmigen seitlichen Stücke (11) einander zugewandt und miteinander gekoppelt sind.

4. Verbinder nach einem vorherigen Anspruch, wobei die unteren Enden der Trägerstücke (3) einstückig mit dem Block ausgebildet sind.

## Revendications

1. Connecteur (10) pour un fusible à profil surbaissé (LP) (200) comprenant : un corps (1) approprié pour être inséré dans un évidement de montage (110) défini dans une boîte à fusibles (100), le corps (1) étant approprié pour être fixé sur une surface inférieure de l'évidement de montage (110), et une extrémité inférieure du corps (1) comprenant un moyen de connexion filaire approprié pour être connecté électriquement à un fil électrique (120) ; une pièce arrière (2) s'étendant à partir du corps (1) et appropriée pour être reçue dans l'évidement de montage (110) ; une paire de pièces de support (3) fléchies à partir de côtés opposés de la pièce arrière (2) pour s'étendre en parallèle l'une à l'autre suivant un sens qui est orthogonal par rapport à un sens d'insertion (Z) d'une borne d'électrode (210) du fusible LP (200), ce qui les rend appropriées à fixer la borne d'électrode (210), cas dans lequel la paire de pièces de support (3) inclut respectivement des pièces de maintien (32), et les deux pièces de maintien (32) des pièces de support (3) sont renfoncées vers l'intérieur afin d'être plus proches l'une de l'autre ; des pièces latérales en forme de L (11) s'étendant horizontalement à partir de côtés opposés immédiatement sous la pièce arrière (2) afin de constituer ensemble un bloc ; les extrémités inférieures des pièces de support (3) étant connectées aux pièces latérales (11) ; et un évidement (31) renfoncé dans une région de connexion entre une extrémité inférieure de chaque pièce de support (3) et ladite une pièce latérale (11) ;
**caractérisé en ce que**
chaque pièce de maintien (32) est incise verticalement afin d'avoir des extrémités supérieure et inférieure qui sont connectées à la pièce de support correspondante (3) ; et
le connecteur (10) comprend en outre une pièce de recouvrement (4) s'étendant sur l'ensemble d'une extrémité supérieure de la pièce arrière (2) et des extrémités supérieures des pièces de support (3) et définissant une entrée (41) appropriée pour le passage de la borne d'électrode (210), cas dans lequel la pièce de recouvrement (4) inclut une paire de pièces de renforcement (42) fléchies à partir de côtés opposés de la pièce de recouvrement (4) afin d'entourer les extrémités supérieures des pièces de support (3), servant ainsi à éviter que les pièces de support (3) ne soient poussées de manière excessive vers l'extérieur en s'éloignant l'une de l'autre.

2. Connecteur selon la revendication 1, les pièces de maintien (32) possédant respectivement des surfaces plates (34) destinées à se faire face ; et une saillie à pression (35) laquelle fait saillie vers l'intérieur à partir de la surface plate (34) appropriée pour presser sur la borne d'électrode (210).

3. Connecteur selon la revendication 1 ou 2, des extrémités distales des pièces latérales en forme de L (11) se faisant face et étant couplées ensemble.

4. Connecteur selon n'importe quelle revendication précédente, les extrémités inférieures des pièces de support (3) étant formées d'un seul tenant avec le bloc.
